# EUROPEAN PATENT APPLICATION

(11) **EP 2 960 255 A1**
(43) Date of publication of application: **30.12.2015**
(21) Application number: 14173430.1
(22) Date of filing: 23.06.2014
(51) Int. Cl.: C08F 2/24, C08F 220/10

(54) **Method of manufacturing pH responsive latexes and uses thereof**

(71) Applicant: Henkel AG&Co. KGAA, 40589 Düsseldorf (DE); Max-Planck-Gesellschaft zur Förderung der Wissenschaften e.V., 80539 München (DE)
(72) Inventor: Taden, Andreas, 40597 Düsseldorf (DE); Landfester, Katharina, 55122 Mainz (DE); Dundua, Alexander, 40227 Düsseldorf (DE)
(74) Representative: Peters, Frank M.

(57) **Abstract**

The present invention relates to a method for the production of pH responsive latexes, the method including: (i) preparing a reaction mixture by combining an aqueous solvent containing at least one stabilizer and a monomer mixture comprising: (a) at least one vinylically unsaturated monomer with a solubility in water at 60 °C of > 25 wt.% and comprising an anionic functional group; (b) at least one vinylically unsaturated monomer with a solubility in water at 60 °C of > 0.01 wt.% and < 25 wt.%; and (c) at least one vinylically unsaturated monomer with a solubility in water at 60 °C of < 0.01 wt.%; (ii) homogenizing said reaction mixture of step (i) to generate stabilized miniemulsion droplets containing the monomer mixture; (iii) adding a polymerization initiator to polymerize the miniemulsion droplets. The invention further relates to the thus produced latexes, adhesive compositions containing them and the use of such latexes as adhesives and/or rheology modifiers.

## Description

The present invention relates to a method for the production of pH-responsive latexes by forming a reaction mixture in an aqueous solution comprising ethylenically unsaturated carboxylic acid C₁-C₈ alkyl ester monomers, unsaturated carboxylic acid C₁₀-C₂₆ alkyl ester monomers, and ethylenically unsaturated carboxylic acids, followed by a homogenization and a polymerization process. The rheological properties of the thus produced latexes are adjustable by composition changes and/or variation of the pH. The invention further relates to the thus produced latexes, adhesive compositions containing them and the use of such latexes as adhesives and/or rheology modifiers.

Alkali soluble latexes have been widely used as rheology modifiers for several applications, such as water borne paints and coatings, oil recovery and in other fields. They represent a special class of polymers, which are stable suspensions at lower pH values, but deprotonate and become polyelectrolytes at higher pH. These types of systems are prepared by using emulsion polymerization technique and therefore are referred in literature as alkali soluble emulsion (ASE).

Furthermore, hydrophobically modified alkali soluble emulsions (HASE) are subject to intensive investigation as they exhibit superior performance and characteristics compared to conventional ASE. HASE contain ionogenic groups, which are partially substituted by or modified with highly hydrophobic fragments, which leads to formation of hydrophobic junctions due to hydrophobic forces and consequently to adjustable rheological and mechanical behavior. Often specialty monomers become employed in HASE synthesis and lead to systems with improved characteristics due to physical cross-linking between polymer chains. Because of the mentioned hydrophobic junctions HASE polymers are also referred as associative polymers and represent an alternative to technologies based on nonionic associative polymer systems, such as hydrophobically modified polyacrylamide (HMPAM), ethoxylated urethane (HEUR) and hydroxyethylcellulose (HMHEC).

Most HASE systems represent random copolymers of ethyl acrylate (EA) and methacrylic acid (MAA), usually with the molar ratio 1:1. Use of EA is justified by good balance between glass transition temperature and hydrophobicity. Furthermore specialty monomers that combine hydrophilic and hydrophobic moieties in their molecular structure are frequently applied during HASE polymerization. In the resulting HASE systems the hydrophobic moieties are usually separated from the polymer backbones by polyethylene glycol spacer chains. Despite the simplicity of emulsion polymerization, this method still suffers from certain drawbacks. Particularly - due to the diffusion driven nucleation mechanism, it is required that all monomers do possess a certain solubility in the continuous phase (water) in order to be able to diffuse to the reaction site. The direct use of highly hydrophobic monomers, which principally can provide hydrophobic moieties as associating sites in HASE systems, is therefore highly restricted in a typical emulsion polymerization process. Because of this, the already mentioned specialty monomers, often (meth)acrylic macromonomers, where the reactive double bond is separated from the hydrophobic moiety with a hydrophilic spacer (typically a polyethylene glycol chain), are usually employed. These macromonomers have an increased water-solubility and can also act as nonionic surfactants. A clear drawback of this approach is that these macromonomers can be considered as specialties that require relatively complex synthesis procedures. Furthermore, the variation of various properties, such as the viscoelastic behavior or the neutralization behavior is only possible within a relatively narrow range and therefore limits the potential application, e.g. as rheology modifiers or adhesive systems with adjustable adhesion and/or setting properties.

Generally, a major disadvantage of conventional emulsion polymerization is the fact that it cannot easily be employed for the introduction of highly hydrophobic monomers, such as long chain acrylates, into the polymer, as the use of such monomers is not compatible with the diffusion driven nucleation and chain growth mechanism of emulsion polymerization. This behavior is especially well know for systems with highly hydrophobic monomers contents of > 1 %, the absence of organic (water-soluble) cosolvents like acetone or alcohol during polymerization, and the use of relatively low amounts of surfactant and persulfate initiators (Satpathy & Dunn, British Polymer Journal 20 (1988) 521-524). In other words, direct polymerization of monomers with very strong hydrophobicity in the typically required amounts necessary for HASE systems is basically not possible in standard emulsion polymerization systems due to insufficient partial solubility and hence the hindered diffusion in water.

On the contrary miniemulsion polymerization works best with components of negligible water solubility, which is a consequence of the so-called nanoreactor concept based on suppressed interparticle diffusion.

Accordingly, in all existing techniques certain restrictions apply in terms of monomer choice.

While it would be desirable to have hydrogels with tunable viscoelastic properties where hydrophobic associations are employed as an effective energy dissipating mechanism for finding a proper balance between elastic and loss modulus for different applications, so far the synthesis of such hydrogels has been hampered by the necessity for complex multistep synthetic procedures or undesirably high surfactant concentrations (for micellar copolymerization).

Moreover, standard (H)ASE systems have a very strong drop in their viscosity upon dilution, which leads to issues for example in wet bottle labeling. For such applications, it would be desirable to have "casein" labeling adhesives available. Casein is a natural protein with a complex structure and interaction behavior forming various conformations, aggregates and (sub)-structures starting to "thicken" when it comes into contact with a cold and wet interface. So far it remains difficult to obtain synthetic labeling adhesives which can mimic this behavior.

There is thus need in the art for systems that overcome the above drawbacks of existing technologies. The present invention meets this need by providing a method for the production of hydrophobically modified pH responsive highly functionalized latexes via a novel polymerization method based on a combined emulsion/miniemulsion approach. The thus obtained pH responsive latexes show sharp increase in viscosity upon increasing pH due to deprotonation of acid groups and high electrostatic repulsion, while incorporation of hydrophobic groups facilitates the formation of hydrophobic junctions and alters (and when properly regulated - improves) rheological behavior. In other words, in these systems regulation of storage and loss modulus and tan δ (damping or loss factor) in wide range is easily possible simply by varying composition in a single step process. Such properties are of immense importance for multiple applications, such as adhesive systems, rheology modifiers or nanogels for drug delivery applications.

The method described herein has the major advantages that the synthesis (1) is fast and easy, because the synthetic procedure can be accomplished in one step using commercially available compounds and fewer restrictions apply for the choice of compounds that provide the hydrophobic groups; and (2) can be conducted as one pot synthesis. The latexes obtainable according to the method described are advantageous as their rheological properties (1) can be adjusted over a wide range just by small changes in chemical compositions; and (2) postsynthetic tuning of rheological properties and dilution induced thickening using additives is possible ("casein mimetic" behavior).

In a first aspect, the present invention thus relates to a method for the production of pH responsive latexes, the method including:
(i) preparing a reaction mixture by combining an aqueous solvent containing at least one stabilizer, preferably at least one surfactant, and a monomer mixture comprising:
   (a) at least one vinylically unsaturated monomer with a solubility in water at 60 °C of > 25 wt.% and comprising an anionic functional group, preferably a carboxylic acid, phosphonic acid, and/or sulfonic acid group, or a salt or anhydride thereof, more preferably an ethylenically unsaturated C₃-C₅ carboxylic acid monomer;
   (b) at least one vinylically unsaturated monomer with a solubility in water at 60 °C of > 0.01 wt.% and < 25 wt.%, preferably an ethylenically unsaturated C₃-C₅ carboxylic acid C₁-C₈ alkyl ester monomer; and
   (c) at least one vinylically unsaturated monomer with a solubility in water at 60 °C of < 0.01 wt.%, preferably an ethylenically unsaturated C₃-C₅ carboxylic acid C₁₀-C₂₆ alkyl ester monomer;
(ii) homogenizing said reaction mixture of step (i) to generate stabilized miniemulsion droplets containing the monomer mixture;
(iii) adding a polymerization initiator, preferably a water-soluble polymerization initiator, to polymerize the miniemulsion droplets.

Another aspect of the invention relates to the pH responsive latexes obtainable according to the methods described herein, in particular latexes which have been treated with a base, for example alkali hydroxides, alkali oxides, ammonium hydroxides, various amines, including, but not limited to triethanolamine, ethoxylated diamines or polyamines, such as those commercially available under the trademark name Jeffamine® (Huntsman), ammonia, 2-amino-2-methylpropanol (AMP), dimethylaminoethanol (DMAE), 3-(dimethylamino)-1,2-propanediol, and mixtures thereof, to adjust the rheological properties depending on the intended purpose. These bases can also be used to improve film-forming properties due to their plasticizing effect, decrease of T_{g} and/or decreased evaporation.

In still another aspect, the present invention also encompasses adhesive compositions containing the latexes obtained according to the methods described herein, in particular water-based labeling adhesives or water-based pressure sensitive adhesives (PSAs).

In a still further aspect, the invention also relates to the use of latexes obtainable according to the methods described herein as labeling adhesives or rheology modifiers.

The term "pH responsive", as used herein, relates to the property of materials, especially polymers, to respond to the changes in the pH of the surrounding medium by protonation and deprotonation of ionic groups, in particular carboxylic acid groups in the polymer chain. Protonation and deprotonation of such pH responsive polymers is reversible and influences their rheological properties due to decreased and increased electrostatic repulsion in the polymer, especially in polar solvents (e.g. water or water/alcohol mixtures). Such materials may swell or collapse depending on the pH of their environment.

In the following, the invention is described in greater detail. It is however understood that the present invention is not limited to the below embodiments, but can easily be adapted to use other monomers, stabilizers, surfactants, and polymerization initiators. Such alternative embodiments are also encompassed by the scope of the instant invention.

In a first step of the method to synthesize pH responsive latexes, a reaction mixture, preferably a pre-emulsion, is prepared. The reaction mixture contains the above-described monomer mixture and preferably at least one stabilizer/surfactant emulsified in an aqueous solvent. The aqueous solvent contains water as the main constituent or may consist of water. In various embodiments, the aqueous solvent contains water as the main constituent and additionally contains one or more non-aqueous solvents, for example selected from the group of monohydric or polyhydric alcohols, alkanolamines or glycol ethers, provided that they are miscible with water in the concentration range given. The solvents are preferably selected from ethanol, n- or i-propanol, butanols, glycol, propanediol or butanediol, glycerol, diglycol, propyl or butyl diglycol, hexylene glycol, ethylene glycol methyl ether, ethylene glycol ethyl ether, ethylene glycol propyl ether, ethylene glycol mono-n-butyl ether, diethylene glycol methyl ether, diethylene glycol ethyl ether, propylene glycol methyl, ethyl or propyl ether, dipropylene glycol monomethyl or ethyl ether, di-isopropylene glycol monomethyl or ethyl ether, methoxy, ethoxy or butoxy triglycol, 1-butoxyethoxy-2-propanol, 3-methyl-3-methoxybutanol, propylene glycol t-butyl ether and mixtures of these solvents. In the aqueous solvent, non-aqueous solvents may be used in quantities of between 0.5 and 35 wt.%, but preferably less than 30 wt.% and in particular less than 25wt.%.

"At least one", as used herein in connection with the different monomers and surfactants, relates to one or more, preferably 1, 2, 3, 4, 5, 6, 7, 8, 9, 10 or more. It is understood that this term, when used in combination with the described monomers or surfactants, does not relate to the absolute number of molecules, but rather to the type of the monomer or surfactant used. By way of example only, the term "at least one C₃-C₅ carboxylic acid monomer" thus means that one or more different C₃-C₅ carboxylic acid monomers can be used, for example methacrylic acid or a combination of methacrylic acid and acrylic acid.

The monomers used in the methods described herein are vinylically unsaturated monomers, preferably ethylenically unsaturated carboxylic acids and alkyl esters thereof. Typical monomers based on ethylenically unsaturated compounds that can be used according to the present invention, without being limited thereto, include maleic acid, methylmaleic acid, fumaric acid, and the respective alkyl esters thereof, (meth)acrylic acid and esters thereof, crotonic acid and esters thereof, itaconic acid and esters thereof, the acid alkyl esters being in each case selected from esters having C₁-C₈ carbon atoms or C₁₀-C₂₆ carbon atoms. The alkyl esters described herein can be branched or straight chain.

The term "highly hydrophobic monomers", as used herein, relates to vinylic monomers with a solubility in water at 60 °C of < 0,01 wt.%, preferably ethylenically unsaturated C₃-C₅ carboxylic acid C₁₀-C₂₆ alkyl ester monomers.

The term "hydrophilic monomers", as used herein, relates to vinylic monomers with a solubility in water at 60 °C of > 25 wt.%, preferably those comprising an anionic functional group, such as a carboxylic acid, phosphonic acid, and/or sulfonic acid group, or a salt or anhydride thereof. More preferably, the hydrophilic monomers are ethylenically unsaturated C₃-C₅ carboxylic acid monomers.

The term "hydrophobic monomers", as used herein, relates to vinylic monomers with a solubility in water at 60 °C of > 0,01 wt.% and < 25 wt.%, preferably ethylenically unsaturated C₃-C₅ carboxylic acid C₁-C₈ alkyl ester monomers.

The solubility of the monomers, as referenced above, is the solubility in water as determined by gas chromatography according to Chai et al. (Chai et al. (2005) "Simplified multiple headspace extraction gas chromatographic techniques for determination of monomer solubility in water", Journal of Chromatography, Vol. 1070 (1-2), pages 225-229) and described in Chai et al. (Chai et al. (2005) "Measurement of the solubilities of vinylic monomers in water", Industrial & Engineering Chemistry Research, Vol. 44(14), pages 5256-5258).

In various embodiments, the vinylically unsaturated monomers comprising an anionic functional group, such as a carboxylic acid, phosphonic acid, and/or sulfonic acid group, or a salt or anhydride thereof, are selected from monoethylenically unsaturated alkyl or arylsulfonic acids, such as vinyl sulfonic acid, methallyl sulfonic acid, vinyl benzene sulfonic acid, acrylamidoethane sulfonic acid, acrylamido-2-methylpropane sulfonic acid, 2-sulfoethyl(meth)acrylate, sulfopropyl(meth)acrylate, α,β-unsaturated C₃-C₆ carboxylic acids, α,β-unsaturated C₄-C₈ dicarboxylic acids or the anhydrides thereof. "Salts", as used in connection with these monomers, include the salts of the listed acids with any suitable cation, preferably metal cation, such as, without limitation sodium and potassium, or ammonium. Preferred in the sense of the present invention are ethylenically unsaturated C₃-C₅ carboxylic acid monomers, particular those selected from methacrylic acid (MAA), acrylic acid (AA), fumaric acid, methyl maleic acid, maleic acid, itaconic acid, crotonic acid, or mixtures thereof, more preferably methacrylic acid, acrylic acid or mixtures thereof, most preferably methacrylic acid.

The ethylenically unsaturated carboxylic acid alkyl ester monomers used according to the methods described herein are preferably acrylic acid or methacrylic acid alkyl esters.

The ethylenically unsaturated C₃-C₅ carboxylic acid C₁-C₈ alkyl ester monomer may be a methacrylic acid C₁-C₈ alkyl ester monomer, preferably a methacrylic acid C₁-C₃ alkyl ester monomer, more preferably a methacrylic acid methyl ester monomer. Another preferred monomer is methacrylic acid 2-ethylhexyl ester. Alternatively, the ethylenically unsaturated C₃-C₅ carboxylic acid C₁-C₈ alkyl ester monomer may be an acrylic acid C₂-C₈ alkyl ester monomer, preferably an acrylic acid C₃-C₈ alkyl ester monomer, more preferably an acrylic acid butyl ester monomer. Another preferred monomer is acrylic acid 2-ethylhexyl ester. Also contemplated is the use of a mixture of the afore-described methacrylic acid alkyl esters and acrylic acid alkyl esters. In a preferred embodiment, the ethylenically unsaturated C₃-C₅ carboxylic acid C₁-C₈ alkyl ester monomer comprises or consists of a mixture of methyl methacrylate and butyl acrylate. Such mixture can advantageously replace the previously used ethyl acrylate, which is less desirable due to its low odor threshold. In such a mixture, the butyl acrylate or the 2-ethylhexyl acrylate lowers the glass transition temperature and maintains miniemulsion droplet stability due to its higher hydrophobicity compared to other monomers employed.

In various embodiments, the ethylenically unsaturated C₃-C₅ carboxylic acid C₁₀-C₂₆ alkyl ester monomer is a methacrylic acid C₁₀-C₂₆ alkyl ester monomer, preferably a methacrylic acid C₁₂-C₁₈ alkyl ester monomer. Alternatively, the ethylenically unsaturated C₃-C₅ carboxylic acid C₁₀-C₂₆ alkyl ester monomer may be an acrylic acid C₁₀-C₂₆ alkyl ester monomer, preferably an acrylic acid C₁₂-C₁₈ alkyl ester monomer, more preferably an acrylic acid C₁₄-C₁₈ alkyl ester monomer. Suitable monomers include, without limitation, lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate and mixtures thereof. Again, mixtures of the afore-described methacrylic acid alkyl esters and acrylic acid alkyl esters may be used.

In various embodiments, any of the above esters may comprise one or more functional groups in the alkyl moiety provided that the functional groups do not react with each other under the reaction conditions described herein. Exemplary compounds include those that comprise amino, hydroxyl or N-methylol groups in the alcohol chain, such as hydroxyethyl (meth)acrylate, hydroxypropyl (meth)acrylate, hydroxybutyl (meth)acrylate, (meth)acrylamide, hydroxyethyl acrylamide, allyl carbamate, N-methylol (meth)acrylamide, N-methylol allyl carbamate as well as the N-methylolesters, acrylamidomethoxy acetic acid methyl esters, N-dimethylamino propyl methacrylamide, N-methyl (meth)acrylamide, N-butyl (meth)acrylamide, N-cyclohexyl (meth)acrylamide, acryl nitrile and the like. The amount of these functionalized compounds should however preferably be below 15 wt.-% relative to the total amount of these esters.

In one specific embodiment of the described methods, the at least one ethylenically unsaturated C₃-C₅ carboxylic acid monomer is selected from the group consisting of methacrylic acid (MAA) and acrylic acid (AA), the at least one ethylenically unsaturated C₃-C₅ carboxylic acid C₁-C₈ alkyl ester monomer is selected from the group consisting of methyl methacrylate (MMA), butyl acrylate (BA), 2-ethylhexyl acrylate (2-EHA) and mixtures thereof, preferably mixtures of MMA and BA or MMA and 2-EHA, and the at least one ethylenically unsaturated C₃-C₅ carboxylic acid C₁₀-C₂₆ alkyl ester monomer is selected from the group consisting of lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate and mixtures thereof.

In addition to the above-listed monomers, the monomer mixture may further comprise other monomers, for example monomers comprising siloxane groups, such as, without limitation, vinyl trimethoxy silanes, alkylvinyl dialkoxy silanes or (meth)acryloxyalkyl trialkoxy silanes. Concrete examples include, without limitation, (meth)acryloxyethyl trimethoxy silane and (meth)acryloxypropyl trimethoxy silane. Also suitable are polysiloxane macromonomers having a molecular weight Mₙ of 1000 to 40000 and comprising 0,5 to 2,5 ethylenically unsaturated double bonds per molecule. Preferred compounds are those that have a molecular weight Mₙ of 2000 to 20000, preferably 2500 to 10000, more preferably 3000 to 7000, and 0,5 to 2,5, preferably 0,5 to 1,5 ethylenically unsaturated double bonds per molecule. Such compounds are for example disclosed on pages 5-7 of DE 38 07 571 A1, columns 3-7 of DE 37 06 095 A1, pages 3-6 of EP 0358153 B1, columns 5-9 of US 4,754,014 A1, in DE 44 21 823 A1 or on pages 12-18 of WO 92/22615.

Other suitable monomers include polyunsaturated monomers that can acts as crosslinkers. If present, such polyunsaturated monomers are only present in comparably small amounts, i.e. typically up to 5 wt.%, preferably up to 3 wt.-% relative to the total weight of the monomer mixture. Preferred are monomers that contain two vinyl groups. Exemplary compounds that are suitable as crosslinking monomers include, without limitation, diallyl phthalates, diallyl maleinate, triallyl cyanurate, tetraallyl oxyethane, divinyl benzene, allyl acrylate, allyl methacrylate, vinyl crotonate, butanediol-1,4-dimethacrylate, triethyleneglycol dimethacrylate, divinyl adipate and combinations thereof.

In various embodiments, the monomer mixture contains ethylenically unsaturated carboxylic acid monomers in a concentration range of from 10 to 50 wt.%, preferably 15-45 wt.%, more preferably 20-40 wt.%. The at least one ethylenically unsaturated C₃-C₅ carboxylic acid C₁-C₈ alkyl ester monomer may be contained in a concentration range of from 49.9 to 89.9 wt.%, preferably 55-80 wt.%, more preferably 60-75 wt.%. The highly hydrophobic monomer, i.e. the ethylenically unsaturated C₃-C₅ carboxylic acid C₁₀-C₂₆ alkyl ester monomer may be comprised in a concentration range of from 0.1 to 10 wt.%, preferably 1-8 wt.%, particularly preferably 2-5 wt.%.

As described above, the monomer mixture may comprise a mixture of methyl methacrylate and butyl acrylate. Those two monomers are preferably used in a weight ratio of methyl methacrylate: butyl acrylate of 1:2 to 6:1.

In various embodiments, the monomer mixture comprises methacrylic acid (MAA), methyl methacrylate (MMA) and butyl acrylate (BA) in amounts of 30-70 wt.-% MMA, 10-30 wt.-% BA and 20-40 wt.-% MAA. Particularly preferred in view of miniemulsion droplet stability before and during polymerization, ease of dissolution and proper molecular weights is a mixture of about 55 wt.-% MMA, about 15 wt.-% BA and about 30 wt.-% MAA.

The reaction mixture further comprises at least one "stabilizer". The term "stabilizer", as used herein, relates to a class of molecules that can stabilize the droplets in a dispersion or emulsion, i.e. prevent coagulation or coalescence. The stabilizer molecules may adhere to or associate with the droplet surface. Furthermore the stabilizer may covalently react with the monomers upon polymerization. In various embodiments the stabilizer molecules comprise a hydrophilic and a hydrophobic part, with the hydrophobic part interacting with the droplet and the hydrophilic part be exposed to the solvent. The stabilizers may be surfactants and may bear an electric charge, for example may be anionic surfactants. Exemplary stabilizers that can be used in accordance with the present invention include sodium dodecyl sulfate (SDS).

Other preferred anionic surfactants useful in accordance with the claimed methods are compounds of the general formula I

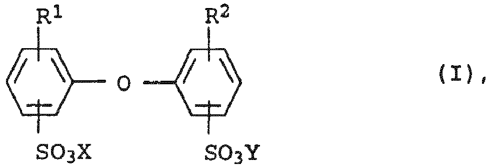

Wherein R¹ and R² are independently hydrogen or C₄-C₂₄ alkyl provided that not both are hydrogen, and X and Y represent alkali metal ions or ammonium ions. R¹ and R² are preferably linear or branched alkyl with 6 to 18 carbon atoms or hydrogen, in particular alkyl with 6, 12 or 16 carbon atoms. X and Y are preferably sodium, potassium, ammonium, with sodium being particularly preferred. Preferred compounds are those wherein X and Y are sodium, R¹ is a branched alkyl group with 12 carbon atoms and R² is hydrogen or the same as R¹. Typically, technical mixtures are used that comprise 50 to 90 wt.-% of the monoalkylated product, such as Dowfax® 2A1 (Dow Chemical Company). Such compounds are widely known, for example from US-A 4,269,749, and are commercially available.

Alternative stabilizers/surfactants that may also be used in the presently described methods are known to those skilled in the art and include for example other known surfactants or hydrophobically modified polar polymers.

In various embodiments, the mixtures described herein can further comprise other protective colloids, such as polyvinyl alcohols, in particular hydrophobically modified polyvinyl alcohols, cellulose derivatives or vinyl pyrrolidone. A more detailed description of suitable compounds can, for example, be found in Houben-Weyl, Methoden der Organischen Chemie, Bd. 14/1, Makromolekulare Stoffe, Georg-Thieme-Verlag, Stuttgart, 1961, pages 411-420.

The total amount of surfactants is typically up to 30 wt.-%, preferably 0.1 to 10 wt.-%, more preferably 0.2 to 6 wt.-%, relative to the total amount of monomers.

In all above described embodiments, the stabilizers and/or surfactants may be provided in form of an aqueous solution. The aqueous solution may be similar to the aqueous solvent used and may, in addition to water, contain non-aqueous solvents for example selected from the group of monohydric or polyhydric alcohols, alkanolamines or glycol ethers, provided that they are miscible with water in the concentration range given. Suitable non-aqueous solvents include, but are not limited to, ethanol, n- or i-propanol, butanols, glycol, propanediol or butanediol, glycerol, diglycol, propyl or butyl diglycol, hexylene glycol, ethylene glycol methyl ether, ethylene glycol ethyl ether, ethylene glycol propyl ether, ethylene glycol mono-n-butyl ether, diethylene glycol methyl ether, diethylene glycol ethyl ether, propylene glycol methyl, ethyl or propyl ether, dipropylene glycol monomethyl or ethyl ether, di-isopropylene glycol monomethyl or ethyl ether, methoxy, ethoxy or butoxy triglycol, 1-butoxyethoxy-2-propanol, 3-methyl-3-methoxybutanol, propylene glycol t-butyl ether and mixtures of these solvents. Non-aqueous solvents can be used in quantities of between 0.5 and 35 wt.%, but preferably less than 30 wt.% and in particular less than 25 wt.%.

In various embodiments, the reaction mixture may comprise a stabilizer/surfactant as described above.

The obtained reaction mixture or pre-emulsion is subsequently homogenized in order to achieve miniemulsion droplets containing the above monomers with an even distribution especially with respect to size of the miniemulsion droplets and composition of the droplets. Due to the insolubility of highly hydrophobic monomers in the aqueous solvent (continuous phase), it is usually difficult to obtain colloidally stable emulsions containing hydrophilic monomers as well as highly hydrophobic monomers. The inventors have however found that by using the polymerization technique described herein highly hydrophobic monomers can be incorporated into a mixture containing a stabilizer/surfactant, hydrophilic monomers and hydrophobic monomers resulting in a colloidally stable miniemulsion.

Homogenization of the reaction mixture or pre-emulsion in order to form the stabilized miniemulsions described herein is achieved by combining the monomers in liquid form, for example in form of a solution in water in the presence of a stabilizer or surfactant under the action of a shear force, for example by a high-pressure homogenizer having an energy input in the range of from 10³ to 10¹ J per second per liter of the emulsion and/or shear rates of at least 1000000/s. The shear rates can be readily determined by those skilled in the art by methods well-known in the field. The shear force can also be brought about by means of ultrasound, the ultrasonic treatment preferably occurring at 10 to 60 kHz and for no longer than 300 seconds, with an initial output power of the ultrasound source that produces a heating of at least 1°C, nut no more than 10°C of the volumes combined at a mixing temperature of 25°C.

The high shear process, as used herein, can be any known process for dispersing or emulsifying in a high shear field. Examples for suitable processes are, for example, disclosed in DE 196 28 142 A1, page 5, lines 1-30, DE 196 28 143 A 1, page 7, lines 30-58, and EP 0 401 565 A 1.

The term "miniemulsion" or "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 100 and 300 nm.

The polymerization of the monomer mixture is carried out by the appropriate polymerization process, preferably by radical polymerization. For this purpose, polymerization initiators can be used. Readily usable initiators may be thermally activatable, radiation activatable, such as UV initiators, or redox activatable and are preferably selected from radical initiators. Suitable radical initiators are widely known in the art and readily available and include organic azo or peroxo compounds. The initiators are preferably water-soluble. When the polymerization is initiated by water-soluble initiator, free radicals generate in aqueous phase first and diffuse to water/monomer interface to initiate the polymerization inside droplets. The polymerization results in a highly soluble polymer after deprotonation ("neutralization step"), even with low contents of ionogenic groups by achieving a more even distribution of the latter along the polymer chains. Exemplary initiators used herein include peroxodisulfates, such as potassium peroxodisulfate (KPS). The polymerization can be carried out at elevated temperature, for example a temperature in the range of 50-90°C, preferably 60-80°C, more preferably about 70°C. The polymerization time can range from 0.1 to 24 hours, preferably 0.5-6 hours, more preferably 1-3 hours.

The term "about", as used herein in connection with a numerical value, relates to a variance of ±20%, preferably ±10% of the respective value.

The amount of residual monomers can be further decreased chemically by radical post-polymerization, preferably by use of redox initiators, such as those described in DE-A 44 35 423, DE-A 44 19 518 and DE-A 44 35 422. Suitable oxidants for the post-polymerization include, but are not limited to hydrogen peroxide, t-butyl hydroperoxide, cumol hydroperoxide or alkali peroxosulfates. Suitable reducing agents include sodium disulfite, sodium hydrogen sulfite, sodium dithionite, sodium hydroxymethanesulfite, formamidine sulfinic acid, acetone bisulfate, ascorbic acid and reducing saccharides as well as water-soluble mercaptanes, such as mercapto ethanol. Post-polymerization with a redox initiator can be done in a temperature range of 10 to 100°C, preferably 20 to 90 °C. The redox agents can be added independently from each other either completely or continuously over a period of 10 minutes to 4 hours. To improve the efficiency of the redox agents, soluble salts of metal with different valences, such as iron, copper or vanadium salts, can be added to the reaction mixture. Commonly, also complex forming agents are added, which keep the metal salts in solution under the reaction conditions.

To control the molecular weight of the polymers, a chain transfer agent may be used in the polymerization process. Suitable chain transfer agents are known in the art and include, without being limited thereto, various thiols, such as 1-dodecanethiol. Such chain transfer agents may be used in the amounts necessary to adjust the molecular weight to the desired range, with useful amounts being in the range of 0.05 to 5 wt.-%, preferably about 0.1 to 2.0 wt.-%, more preferably about 0.3 to 1.0 wt.-% with respect to total monomer mass.

The molecular weight M_{w} can be determined by using any known method, including, but not limited to gel permeation chromatography (GPC). The preferred method is GPC with tetrahydrofuran (THF) as eluent according to DIN 55672-1:2007-08, preferably with measurement conditions of 35 °C. For calibration polymethylmethacrylate standards should be used to determine the apparent molecular weights. Based on this method the molecular weight of the polymers is preferably less than 500000 g/mol, more preferably less than 250000 g/mol, most preferably less than 100000 g/mol.

The particle size of the polymer particles can be a z-average particle size of <500 nm, preferably <300 nm, more preferably in the range of 50to 250 nm, and most preferably in the range of 70 to 250 nm as determined by dynamic light scattering according to ISO 22412:2008.

There is a fundamental difference between traditional emulsion polymerization and a miniemulsion polymerization, since whereas particle formation in the former is a mixture of micellar and homogenous nucleation, particles formed via miniemulsion are mainly formed by droplet nucleation. Without wishing to be bound to any particular theory, it is believed that in the present joint emulsion/miniemulsion approach several nucleation processes occur simultaneously. For example it is assumed that the dissolved hydrophilic monomers start to polymerize in the water phase first. The accompanied decreased solubility of the growing oligomer/polymer chains can then lead to their precipitation onto the droplets interface followed by quick radical entry and continued polymerization inside the forming latex particles. At the same time secondary nucleation is also possible, which should lead to the formation of particles representing mostly copolymers of hydrophilic and hydrophobic monomers. The complete solubility of the obtained HASE systems at elevated pH in combination with the excellent reproducibility and ease rheology adjustment does however support the presence and importance of the droplet nucleation mechanism.

The joint emulsion/miniemulsion polymerization technique described herein simplifies the synthesis of hydrophobically modified pH responsive latexes. The fact that nucleation occurs significantly in the droplet enables introduction of highly hydrophobic monomers without any hindrances and broadens the choice of hydrophobic modifiers. Monomers with virtually any hydrophobicity can be introduced into the polymer via this method. Highly hydrophobic compounds employed in miniemulsion polymerization as stabilizers against Ostwald ripening, when reactive, can act themselves as hydrophobic modifiers for the above described polymers and during the reaction become part of polymer chains. Such systems cannot be considered as classical miniemulsions due to high content of water soluble methacrylic acid, but rather as a merger of the approaches of miniemulsion and emulsion polymerization employing advantages of both systems.

The methods described herein are preferably one-pot methods for the production of pH responsive latexes.

Those skilled in the art can use the method as described herein and vary the monomers, surfactants, radical initiators, the composition of the monomer mixtures, the homogenization method, and the reaction conditions, i.e. reaction temperature, reaction time, such that they will arrive at pH responsive latexes with those rheological properties which are required for the intended purpose.

The pH responsive latexes obtained according to the described methods may be treated with a base which is capable to deprotonate a carboxylic acid to adjust the rheological properties. Suitable bases include various hydroxides, for example alkali hydroxides, alkali oxides or ammonium hydroxides or mixtures thereof. Also suited are various amines, including, but not limited to triethanolamine, ethoxylated diamines or polyamines, such as those commercially available under the trademark name Jeffamine® (Huntsman), ammonia, 2-amino-2-methylpropanol (AMP), dimethylaminoethanol (DMAE), 3-(dimethylamino)-1,2-propanediol, and mixtures thereof.

The invention as described herein also encompasses the latexes that are obtained using the described methods. The latexes produced according to the described methods may have a solid content in the range of from about 10 to 60 wt.-%, preferably about 15 to 50 wt.-%, more preferably about 20 to 40 wt.-%.

These latexes can be used as adhesives, in particular water based adhesives, such as labeling adhesives, wood adhesives, paper converting (tissue & towel, packaging) adhesives or pressure sensitive adhesives (PSAs).

In various embodiments, the latexes described herein and obtained using the described methods are free of phase transfer agents as commonly used for incorporation of hydrophobic monomers into standard HASE systems, such as cyclodextrins. "Free of", as used in this context, means that the compositions do contain less than 1 wt.-% of the respective type of compound, preferably less than 0.1 wt.-%, more preferably less than 0.05 wt.-%, most preferably less than 0.01 wt.-% relative to the respective system, e.g. the ph responsive latex.

Also contemplated herein are adhesive compositions that comprise the latexes obtainable according to the described methods. Such adhesive compositions can contain further ingredients routinely used in the art and well known to those skilled in the art.

The latexes obtained with the described methods can be used as adhesives and/or rheology modifiers in numerous applications, including but not limited to paints, coatings, adhesives, and in oil recovery. A particularly preferred application field for the latexes described herein are labeling adhesives, such as those for labeling of bottles, for example glass or plastic bottles. Labeling of bottles suffers from the drawback that due to process conditions water may condense on the surface of the bottles and interfere with the labeling process insofar as the dilution effect decreases the adhesiveness of the labeling adhesive and thus may lead to undesired shift of the labels. The latexes described herein do not lose their adhesiveness upon dilution and are thus particularly useful for such labeling applications.

### Examples

*Materials:* Methyl methacrylate (MMA, Merck, >99 %), methacrylic acid (MAA, Merck, >99 %), butyl acrylate (BA, Acros Organics, 99 %), lauryl methacrylate (LMA, Aldrich, 96 %), hexadecyl methacrylate (HDMA, ABCR, 98 %), tetradecyl acrylate (TDA, ABCR, 95%), octadecyl acrylate (ODA, Sigma, >95 %),hexadecane (HD, Merck, >99 %), hexadecanoic acid (Merck, >98 %), hexadecyl alcohol (Sigma, 99 %), 1-dodecanthiol (Alfa Aesar, 98 %), potassium persulfate (KPS, Merck, >99%), 2,2'-azobis(2-methylbutyronitrile) (V-59, Wako, Japan), sodium dodecyl sulfate (SDS, BASF), Dowfax-2A1 (Dow Chemicals), sodium hydroxide (NaOH, Karl Roth GmbH, >99 %) were used as received.

*Latex preparation:* Highly acid functionalized polymers were prepared by miniemulsion polymerization. In the standard procedure a given amount of surfactant (see tables) was dissolved in 22 ml of water, while 100 mg of initiator (KPS) was dissolved in 2 ml of water. For oil soluble initiators, only the surfactant was dissolved in 24 ml water, while the initiator was premixed with monomers. 6 g of monomer mixture of varying composition (see tables) and the chain transfer agent (see tables) was added to the surfactant solution and pre-emulsified by stirring at 1000 rpm for 10 min. Unless otherwise stated 0.048 g (0.8 wt. %) chain transfer agent (CTA, 1-dodecanethiol) was used. The miniemulsion was prepared by ultrasonication of the pre-emulsion at 90 % amplitude for 120 s (Branson sonifier W450 Digital ½" tip) in an ice bath to prevent overheating. Then the miniemulsion was placed in a round bottom flask with magnetic stirring bar and bubbled with nitrogen to get rid of dissolved oxygen. Temperature was increased up to 70 °C and initiator was added in one shot. Samples were stirred at this temperature for 2 hours. Full conversion was monitored with solid content analyzer and confirmed by gas chromatography.

*Synthesis of latexes with high solid content:* Above given standard procedures apply to the latexes with 20 % solid content. For samples with higher solid content the amount of water was reduced accordingly and typically Dowfax-2A1 was employed as a surfactant. The rest of the procedures are similar as described in the preceding section

*Synthesis of semicrystalline pH responsive latexes:* Semicrystalline pH responsive latexes were synthesized according to above described procedure. Stable systems were obtained with Dowfax 2A1 as surfactant and a maximum content of 60 wt. % ODA relative to the total monomer amount.

*Rheological investigations:* For the rheological investigations so-called neutralization curves were built by means of pH adjustment of the individual samples to different values and measuring the corresponding rheological parameters at each pH value. 12 % NaOH solution in water was used for pH adjustment. Defined amounts of NaOH solutions were added to samples slowly and then stirred with mechanical stirrer at 35°C for 15 minutes. Highly viscous, transparent samples were left overnight in the oven at 50°C to get rid of bubbles and assure equilibrium state. All rheological investigations were conducted at 20 (±0.1) °C. Amplitude-sweep oscillatory experiments were conducted at fixed 10 rad/s angular frequency to determine the linear viscoelasticity region (LVR). Almost all samples exhibited linear viscoelasticity behavior within deformation range from 0.01 % to 100 % (small deviations were observed in highly viscous samples at deformations higher than 80 %). Therefore, all frequency sweep experiments were conducted at 0.1 % deformation. All frequency sweep experiments were conducted within frequency range 0.628 rad/s - 628 rad/s (0.1-100 Hz). Data points for comparison of loss factor values in different samples were picked up from measurements at 10 rad/s angular frequency and 0.1 % of deformation. For the experiments which describe the dependence of the rheological behavior on the amphiphilic additives the measurements were conducted at 30 rad/s frequency and data points from LVR at 0.1 % deformation were used for evaluation.

*Postsynthetic tuning possibilities:* To study postsynthetic tuning possibilities 1, 3, and 5 and 20 wt.% ethanol was added to the system and each sample was further diluted with 1, 3, and 5 wt.% water. In certain cases thickening slight and increase of rheological parameters can be observed.

*Equipment:* A Branson digital sonifier W450 with 1/2" tip was used for miniemulsification and a Sartorius MA 35 solid content analyzer was used to monitor conversion. Particle sizes were measured by means of dynamic light scattering (DLS) using a Zetasizer Nano Series (Nano-ZS, Malvern instruments) at a fixed scattering angle of 173° (backscattering) and at 25 °C. Z-average values are used for particle sizes. The rheological investigations were conducted on an Anton-Paar MCR 302 rheometer with 50 mm diameter cone/plate configuration (cone angle of 0,999°.), equipped with a Peltier element for precise temperature regulation and an evaporation blocking hood. For the determination of molecular masses the gel permeation chromatography (GPC) was used. The samples were dissolved in THF and eluted through chromatography column at 35 °C. Polymethylmethacrylate was used for the calibration of GPC column and samples were detected using RI-Detector

### Example 1: Compositions and basic characteristics of synthesized latexes

| **Sample ID** | **MMA [wt%]** | | **BA [wt% ]** | **MAA [wt% ]** | **Z-average[nm]** | **Hydrophobic Modifier** | **CTA [wt% to monomer]** | | **Stabilizer Type** | **Stabilizer content (wt. % to monomer)** | **target solid content** | **Emulsion appearance** | | **Rheology data at elevated pH** |
|---|---|---|---|---|---|---|---|---|---|---|---|---|---|---|
| | | **Investigation of stability of the latexes** | | | | | | | | | | | | |
| L-1 | 30 | | 30 | 40 | 122 | 4% TDA | 0 | | SDS | 1.2 | 20 % | Stable | | - |
| L-2 | 35 | | 25 | 40 | 121 | 4% TDA | 0 | | SDS | 1.2 | 20 % | Stable | | - |
| L-3 | 40 | | 20 | 40 | 163 | 4% TDA | 0 | | SDS | 1.2 | 20 % | Stable | | - |
| L-4 | 45 | | 15 | 40 | 180 | 4% TDA | 0 | | SDS | 1.2 | 20 % | Stable | | - |
| L-5 | 50 | | 10 | 40 | 210 | 4% TDA | 0 | | SDS | 1.2 | 20 % | Stable | | - |
| L-6 | 35 | | 35 | 30 | 102 | 4% TDA | 0 | | SDS | 1.2 | 20 % | Stable | | - |
| L-7 | 40 | | 30 | 30 | 99 | 4% TDA | 0 | | SDS | 1.2 | 20 % | Stable | | - |
| L-8 | 45 | | 25 | 30 | 109 | 4% TDA | 0 | | SDS | 1.2 | 20 % | Stable | | - |
| L-9 | 50 | | 20 | 30 | 133 | 4% TDA | 0 | | SDS | 1.2 | 20 % | Stable | | - |
| L-10 | 55 | | 15 | 30 | 147 | 4% TDA | 0 | | SDS | 1.2 | 20 % | Stable | | - |
| L-11 | 60 | | 10 | 30 | 167 | 4% TDA | 0 | | SDS | 1.2 | 20 % | Stable | | - |
| L-12 | 50 | | 30 | 20 | 100 | 4% TDA | 0 | | SDS | 1.2 | 20 % | Stable | | - |
| L-13 | 60 | | 20 | 20 | 105 | 4% TDA | 0 | | SDS | 1.2 | 20 % | Stable | | - |
| L-14 | 70 | | 10 | 20 | 143 | 4% TDA | 0 | | SDS | 1.2 | 20 % | Stable | | - |

| **Control of the molecular weight** (G', G" and *tan δ* values are taken from frequency sweep experiments at 1 Hz ≈ 6.28 rad/s at 0.1 % deformation amplitude, pH≈8.5 ± 0.1 20 % initial solid content. 12 % NaOH solution was for adjusting the pH, which causes slight reduction of solid content (down to 17,5- 18 %) | | | | | | | | | | | | | | |
|---|---|---|---|---|---|---|---|---|---|---|---|---|---|---|
| L-15 | 55 | | 15 | 30 | N/A | 4% LMA | 0 | | SDS | 1.2 | 20 % | Stable | M_{w}/Mₙ/PDI 9.9.10⁴/6. 6-10³/15.1 | G'/G"(Pa)/*ta n δ*/*f*_{cross}(rad/s) 1033/706/0.6 8/1 |
| L-16 | 55 | | 15 | 30 | N/A | 4% LMA | 0.3 | | SDS | 1.2 | 20 % | Stable | M_{w}/Mₙ/PDI 59-10³/9.9 ·10³/6.0 | G'/G"(Pa)/*ta n* δ/*f*_{cross}(rad/s) 383/557/1.45 /27 |
| L-17 | 55 | | 15 | 30 | N/A | 4% LMA | 0.5 | | SDS | 1.2 | 20 % | Stable | M_{w}/Mₙ/PDI 44·10³/ 8.5·10³/ 5.0 | G'/G"(Pa)/*ta n* δ/*f*_{cross}(rad/s) 93/264/2.83/ 122.5 |
| L-18 | 55 | | 15 | 30 | N/A | 4% LMA | 0.8 | | SDS | 1.2 | 20 % | Stable | M_{w}/Mₙ/PDI 39·10³/ 7.5·10³/ 4.0 | G'/G"(Pa)/*ta n* δ/*f*_{cross}(rad/s) 3.4/48.4/14.2 3/529 |

| Stability vs. solid content | | | | | | | | | | | | | | |
|---|---|---|---|---|---|---|---|---|---|---|---|---|---|---|
| L-19 | 55 | | 15 | 30 | 159 | 4% LMA | 0.8 | | SDS | 1.7 | 25 % | Stable | | - |
| L-20 | 55 | | 15 | 30 | 177 | 4% LMA | 0.8 | | SDS | 1.7 | 30 % | Stable | | - |
| L-21 | 55 | | 15 | 30 | 207 | 4% LMA | 0.8 | | SDS | 1.7 | 35 % | Partial coagulat. | | - |
| L-22 | 55 | | 15 | 30 | - | 4% LMA | 0.8 | | SDS | 1.7 | 40 % | Phase separation | | - |
| L-23 | 55 | | 15 | 30 | - | 4% LMA | 0.8 | | SDS | 2.5 | 35% | Coagulat. | | - |
| L-24 | 55 | | 15 | 30 | - | 4% LMA | 0.8 | | SDS | 3.35 | 35% | Coagulat. | | - |
| L-25 | 55 | | 15 | 30 | 187 | 4% LMA | 0.8 | | Dowfa x-2A1 | 1.7 | 30 % | Stable | | - |
| L-26 | 55 | | 15 | 30 | 193 | 4% LMA | 0.8 | | Dowfa x-2A1 | 1.7 | 35 % | Stable | | - |
| L-27 | 55 | | 15 | 30 | 157/ 496 | 4% LMA | 0.8 | | Dowfa x-2A1 | 1.7 | 40 % | Bimodal / Partial Coagulat. | | - |

| **Samples for rheological Investigation** (G', G" and *tan δ* values are taken from linear viscoelasticity (LV) region at frequency of 10 Rad/s) pH=8. The data at exact pH value of 8 are taken from the interpolated (using polynomial fit function built in Origin 8.5 (OriginLab corporation)) neutralization curves. 12 % solution of NaOH used for neutralization which causes slight reduction of solid content (down to 17,5 - 18 %) | | | | | | | | | | | | | | |
|---|---|---|---|---|---|---|---|---|---|---|---|---|---|---|
| L-28 | 55 | | 15 | 30 | N/A | 0% LMA | 0.8 | | SDS | 1.7 | 20 % | Stable | | G'/G"(Pa)/*ta n δ*/ 1.1/29.5/ 26.8 |
| L-29 | 55 | | 15 | 30 | N/A | 2% LMA | 0.8 | | SDS | 1.7 | 20 % | Stable | | G'/G"(Pa)/*ta n δ*/f_{cross}(rad/s) 12.7/107.8 / 8.5/466 |
| L-30 | 55 | | 15 | 30 | N/A | 3% LMA | 0.8 | | SDS | 1.7 | 20 % | Stable | | G'/G"(Pa)/*ta n* δ/*f*_{cross}(rad/s) 38.1/188/ 4.95/228 |
| L-31 | 55 | | 15 | 30 | N/A | 4% LMA | 0.8 | | SDS | 1.7 | 20 % | Stable | | G'/G"(Pa)/*ta n* δ/*f*_{cross}(rad/s) 99.5/313.7/ 3.15/111 |
| L-32 | 55 | | 15 | 30 | N/A | 2,45 % HDMA | 0.8 | | SDS | 1.7 | 20 % | Stable | | G'/G"(Pa)/*ta n δ*/ 74.8/285.3/ 3.8 |

| **Samples with alcohols and their rheology** (pH = 8.5 ± 0.1, G* values are taken from linear viscoelasticity region (LVR) at the 0.1% deformation and 30 rad/s applied frequency. 12 % solution of NaOH used for neutralization which causes slight reduction of solid content (down to 17,5 - 18 % in case of the samples with 20 % solid content) | | | | | | | | | | | | | | |
|---|---|---|---|---|---|---|---|---|---|---|---|---|---|---|
| | | | | | | | | | | | | | **Ethanol wt.% / water for dilution wt.%** | **G*** |
| L-33 | 20 | | 50 | 30 | | 5% ODA | 0.8 | | SDS | 1.7 | 20 % | Stable | 0 / 0 | 529 |
| L-34 | 20 | | 50 | 30 | | 5% ODA | 0.8 | | SDS | 1.7 | 20 % | Stable | 0 / 0.5 | 495 |
| L-35 | 20 | | 50 | 30 | | 5% ODA | 0.8 | | SDS | 1.7 | 20 % | Stable | 0 / 1 | 477 |
| L-36 | 20 | | 50 | 30 | | 5% ODA | 0.8 | | SDS | 1.7 | 20 % | Stable | 0 / 2 | 447 |
| L-37 | 20 | | 50 | 30 | | 5% ODA | 0.8 | | SDS | 1.7 | 20 % | Stable | 0 / 3 | 420 |
| L-38 | 20 | | 50 | 30 | | 5% ODA | 0.8 | | SDS | 1.7 | 20 % | Stable | 0 / 5 | 376 |
| L-39 | 20 | | 50 | 30 | | 5% ODA | 0.8 | | SDS | 1.7 | 20 % | Stable | 2 / 0 | 283 |
| L-40 | 20 | | 50 | 30 | | 5% ODA | 0.8 | | SDS | 1.7 | 20 % | Stable | 2 / 0.5 | 274 |
| L-41 | 20 | | 50 | 30 | | 5% ODA | 0.8 | | SDS | 1.7 | 20 % | Stable | 2 / 1 | 267 |
| L-42 | 20 | | 50 | 30 | | 5% ODA | 0.8 | | SDS | 1.7 | 20 % | Stable | 2 / 2 | 259 |
| L-43 | 20 | | 50 | 30 | | 5% ODA | 0.8 | | SDS | 1.7 | 20 % | Stable | 2 / 3 | 241 |
| L-44 | 20 | | 50 | 30 | | 5% ODA | 0.8 | | SDS | 1.7 | 20 % | Stable | 2 / 5 | 210 |
| L-45 | 20 | | 50 | 30 | | 5% ODA | 0.8 | | SDS | 1.7 | 20 % | Stable | 4 / 0 | 176 |
| L-46 | 20 | | 50 | 30 | | 5% ODA | 0.8 | | SDS | 1.7 | 20 % | Stable | 4 / 0.5 | 169 |
| L-47 | 20 | | 50 | 30 | | 5% ODA | 0.8 | | SDS | 1.7 | 20 % | Stable | 4 / 1 | 163 |
| L-48 | 20 | | 50 | 30 | | 5% ODA | 0.8 | | SDS | 1.7 | 20 % | Stable | 4 / 2 | 157 |
| L-49 | 20 | | 50 | 30 | | 5% ODA | 0.8 | | SDS | 1.7 | 20 % | Stable | 4 / 3 | 146 |
| L-50 | 20 | | 50 | 30 | | 5% ODA | 0.8 | | SDS | 1.7 | 20 % | Stable | 4 / 5 | 133 |
| L-51 | 20 | | 50 | 30 | | 5% ODA | 0.8 | | SDS | 1.7 | 20 % | Stable | 6 / 0 | 112 |
| L-52 | 20 | | 50 | 30 | | 5% ODA | 0.8 | | SDS | 1.7 | 20 % | Stable | 6 / 0.5 | 108 |
| L-53 | 20 | | 50 | 30 | | 5% ODA | 0.8 | | SDS | 1.7 | 20 % | Stable | 6 / 1 | 102 |
| L-54 | 20 | | 50 | 30 | | 5% ODA | 0.8 | | SDS | 1.7 | 20 % | Stable | 6 / 2 | 96 |
| L-55 | 20 | | 50 | 30 | | 5% ODA | 0.8 | | SDS | 1.7 | 20 % | Stable | 6 / 3 | 95 |
| L-56 | 20 | | 50 | 30 | | 5% ODA | 0.8 | | SDS | 1.7 | 20 % | Stable | 6 / 5 | 86 |

| | | | | | | | | | | | | | Propanol wt.% / water for dilution wt.% | G* |
|---|---|---|---|---|---|---|---|---|---|---|---|---|---|---|
| L-57 | 20 | | 50 | 30 | | 5% ODA | 0.8 | | SDS | 1.7 | 20 % | Stable | 0 / 0 | 470 |
| L-58 | 20 | | 50 | 30 | | 5% ODA | 0.8 | | SDS | 1.7 | 20 % | Stable | 0 / 0.5 | 452 |
| L-59 | 20 | | 50 | 30 | | 5% ODA | 0.8 | | SDS | 1.7 | 20 % | Stable | 0 / 1 | 434 |
| L-60 | 20 | | 50 | 30 | | 5% ODA | 0.8 | | SDS | 1.7 | 20 % | Stable | 0 / 2 | 398 |
| L-61 | 20 | | 50 | 30 | | 5% ODA | 0.8 | | SDS | 1.7 | 20 % | Stable | 0 / 3 | 375 |
| L-62 | 20 | | 50 | 30 | | 5% ODA | 0.8 | | SDS | 1.7 | 20 % | Stable | 0 / 5 | 329 |
| L-63 | 20 | | 50 | 30 | | 5% ODA | 0.8 | | SDS | 1.7 | 20 % | Stable | 1 / 0 | 248 |
| L-64 | 20 | | 50 | 30 | | 5% ODA | 0.8 | | SDS | 1.7 | 20 % | Stable | 1 / 0.5 | 265 |
| L-65 | 20 | | 50 | 30 | | 5% ODA | 0.8 | | SDS | 1.7 | 20 % | Stable | 1 / 1 | 250 |
| L-66 | 20 | | 50 | 30 | | 5% ODA | 0.8 | | SDS | 1.7 | 20 % | Stable | 1 / 2 | 246 |
| L-67 | 20 | | 50 | 30 | | 5% ODA | 0.8 | | SDS | 1.7 | 20 % | Stable | 1 / 3 | 218 |
| L-68 | 20 | | 50 | 30 | | 5% ODA | 0.8 | | SDS | 1.7 | 20 % | Stable | 1 / 5 | 184 |
| L-69 | 20 | | 50 | 30 | | 5% ODA | 0.8 | | SDS | 1.7 | 20 % | Stable | 2 / 0 | 156 |
| L-70 | 20 | | 50 | 30 | | 5% ODA | 0.8 | | SDS | 1.7 | 20 % | Stable | 2 / 0.5 | 151 |
| L-71 | 20 | | 50 | 30 | | 5% ODA | 0.8 | | SDS | 1.7 | 20 % | Stable | 2 / 1 | 149 |
| L-72 | 20 | | 50 | 30 | | 5% ODA | 0.8 | | SDS | 1.7 | 20 % | Stable | 2 / 2 | 139 |
| L-73 | 20 | | 50 | 30 | | 5% ODA | 0.8 | | SDS | 1.7 | 20 % | Stable | 2 / 3 | 131 |
| L-74 | 20 | | 50 | 30 | | 5% ODA | 0.8 | | SDS | 1.7 | 20 % | Stable | 2 / 5 | 118 |
| L-75 | 20 | | 50 | 30 | | 5% ODA | 0.8 | | SDS | 1.7 | 20 % | Stable | 3 / 0 | 97 |
| L-76 | 20 | | 50 | 30 | | 5% ODA | 0.8 | | SDS | 1.7 | 20 % | Stable | 3 / 0.5 | 94.6 |
| L-77 | 20 | | 50 | 30 | | 5% ODA | 0.8 | | SDS | 1.7 | 20 % | Stable | 3 / 1 | 92.4 |
| L-78 | 20 | | 50 | 30 | | 5% ODA | 0.8 | | SDS | 1.7 | 20 % | Stable | 3 / 2 | 92.8 |
| L-79 | 20 | | 50 | 30 | | 5% ODA | 0.8 | | SDS | 1.7 | 20 % | Stable | 3 / 3 | 82.6 |
| L-81 | 20 | | 50 | 30 | | 5% ODA | 0.8 | | SDS | 1.7 | 20 % | Stable | 3 / 5 | 76.4 |

| | | | | | | | | | | | | | Ethanol wt.%/ water for dilution wt.% | G* |
|---|---|---|---|---|---|---|---|---|---|---|---|---|---|---|
| L-82 | 55 | | 15 | 30 | | 4.8% HDMA | 0.8 | | SDS | 1.7 | 20 % | Stable | 10 / 0 | 268 |
| L-83 | 55 | | 15 | 30 | | 4.8% HDMA | 0.8 | | SDS | 1.7 | 20 % | Stable | 10 / 0.5 | 264 |
| L-84 | 55 | | 15 | 30 | | 4.8% HDMA | 0.8 | | SDS | 1.7 | 20 % | Stable | 10 / 1 | 265 |
| L-85 | 55 | | 15 | 30 | | 4.8% HDMA | 0.8 | | SDS | 1.7 | 20 % | Stable | 10 / 1.5 | 259 |
| L-86 | 55 | | 15 | 30 | | 4.8% HDMA | 0.8 | | SDS | 1.7 | 20 % | Stable | 10 / 2 | 259 |
| L-87 | 55 | | 15 | 30 | | 4.8% HDMA | 0.8 | | SDS | 1.7 | 20 % | Stable | 10 / 3.5 | 247 |

| | | | | | | | | | | | | | Ethanol wt.%/ water for dilution wt.% | G* |
|---|---|---|---|---|---|---|---|---|---|---|---|---|---|---|
| L-88 | 55 | | 15 | 30 | | 4.8% HDMA | 0.8 | | SDS | 1.7 | 30 % | Stable | 20 / 0 | 112 |
| L-89 | 55 | | 15 | 30 | | 4.8% HDMA | 0.8 | | SDS | 1.7 | 30 % | Stable | 20 / 0.5 | 110 |
| L-90 | 55 | | 15 | 30 | | 4.8% HDMA | 0.8 | | SDS | 1.7 | 30 % | Stable | 20 / 1 | 115 |
| L-91 | 55 | | 15 | 30 | | 4.8% HDMA | 0.8 | | SDS | 1.7 | 30 % | Stable | 20 / 2 | 110 |
| L-92 | 55 | | 15 | 30 | | 4.8% HDMA | 0.8 | | SDS | 1.7 | 30 % | Stable | 20 / 3 | 119 |
| L-93 | 55 | | 15 | 30 | | 4.8% HDMA | 0.8 | | SDS | 1.7 | 30 % | Stable | 20 / 5 | 110 |
| L-94 | 55 | | 15 | 30 | | 4.8% HDMA | 0.8 | | SDS | 1.7 | 30 % | Stable | 20 / 7 | 115 |

### Example 2: Rheological behavior of synthesized latexes

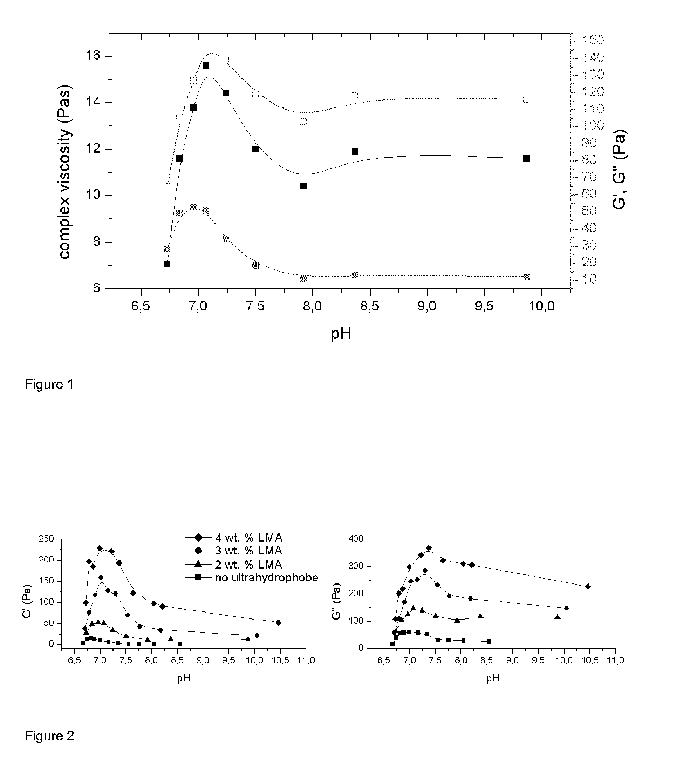

*pH dependence of rheological parameters:* Dependence of rheological parameters on the pH was investigated. For this purpose pH of samples were adjusted at different values as described above. Figure 1 shows the complex viscosity and storage/loss modulus of the composition L-29 (MMA/BA/MAA=55/15/30 wt. %. 2 wt. % lauryl methacrylate as ultrahydrophobe) vs. pH. The black line with corresponding closed black symbols (■) corresponds to the complex viscosity (η*), with the respective Y-axis on the left. Grey curves correspond to storage (G', closed symbol - ■) and loss (G", open symbol - □) moduli with respective Y-axis on the right side. In all cases strong increase and peak values of viscosity, as well as real and imaginary parts of mechanical modulus were observed, followed by partial decrease of the values at higher pH values and ending up in more or less defined plateaus in certain cases (Figure 1).

This rheological behavior can be explained as follows: Shortly after the beginning of neutralization and still at relatively low pH values yet not completely dissolved particles form gel-like network, where swollen cores act as junction points (viscosity peak). Upon pH increase these junctions disappear or weaken and rheological behavior is defined by the ratio of electrostatic repulsion forces and relatively weak clusters formed due to hydrophobic interactions.

*Influence of ultrahydrophobe content:* Strong influence of small amounts of ultrahydrophobes on the rheological behavior was observed in the series of experiments where different amounts of ultrahydrophobe (LMA) were used. Corresponding results are described and explained below. In all cases only LMA was used as ultrahydrophobe and the content of other monomers were fixed at above mentioned arbitrarily defined values (L-29: filled triangle, L-30: filled circle, L-31: filled diamond).

For the reference (L-28: filled squares), samples were prepared without hydrophobic modification, i.e. without introduction of long chain acrylates in the system. Figure 2 represents storage and loss moduli of different samples plotted against pH for samples with different contents of ultrahydrophobe (L-29, L-30 and L-31) compared to reference sample without any ultrahydrophobic modification (L-28). Rather sharply expressed peaks in the storage modulus are caused by high sensitivity of the latter to pH.

The graphs in Figure 2 represent clearly the strongly increased values of mechanical modulus along the increased content of ultrahydrophobe and closer examination reveals several additional noteworthy trends: Peaks are sharper on the graphs representing the storage modulus, which hints at its higher sensitivity to pH. This is explained by the fact that within this pH range (after the peak values of mechanical moduli) the dissolution of swollen latex particles takes place that leads to significant weakening of mechanical junction points.

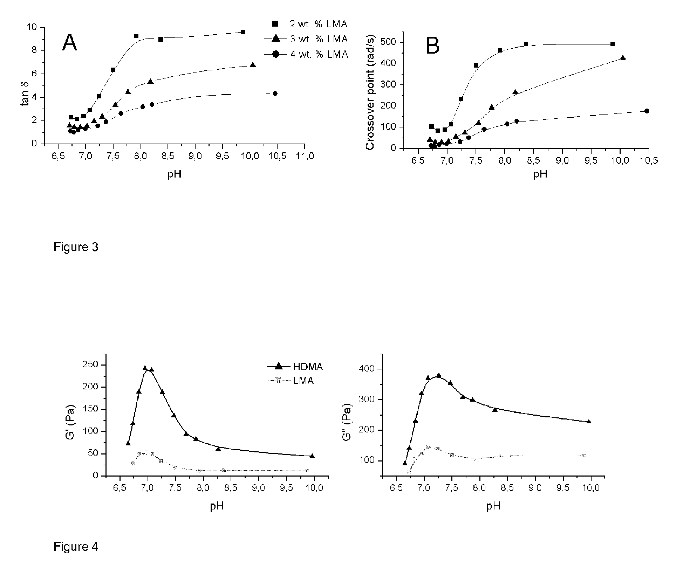

In order to represent this trend more clearly and to show different sensitivity of storage and loss modulus towards pH, loss factor and crossover point between G' and G" plots vs. pH are provided below. Figure 3-A represents the plots of loss factor (tan δ) vs. pH of the samples (MMA/BA/MAA=55/15/30, 0.8 % CTA) with different LMA content (L-29: filled squares, L-30: filled triangles, L-31: filled circles). It represents the ratio of loss modulus to storage modulus at given frequencies and deformations in oscillatory experiments. The data points were picked from oscillatory experiments at 0.1 % deformation and angular frequency 10 rad/s.

Sharply expressed decrease of loss factor along the increased content of ultrahydrophobe can be directly observed, leading to the simple conclusion that increasing content of ultrahydrophobe leads to increased hydrophobic interactions and formation of stronger physically cross-linked network (increased G').

The same trend is observed on the plots of crossover points between G' and G" versus pH (Figure 3-B; L-29: filled squares, L-30: filled triangles, L-31: filled circles). It can be observed that the samples with low ultrahydrophobe content act as viscoelastic fluids up to noticeably high frequencies in oscillatory experiments.

*Influence of the type of ultrahydrophobe:* In order to evaluate the effect of different ultrahydrophobes on the systems two types of acrylates, with 12 and 16 carbon chains were investigated (L-29 (grey boxes) and L-32 (black triangles) with 2 wt. % LMA and its molar equivalent (2.45 wt. %) HDMA, respectively). Similarly to the above described experiments, in these cases also the increase of storage and loss modulus and decrease of loss factor was observed for the samples with hexadecyl methacrylate (Figure 4). From these it can be concluded that not only the amount of ultrahydrophobe, but also the carbon chain length, or generally - hydrophobicity of the amphiphilic polymer, determines final rheological behavior.

### Example 3: Postsynthetic tuning

Possibilities of postsynthetic tuning or, in other words, effects of additives were investigated. Particular interest was devoted to environmentally friendly substances and ethanol was chosen as an example. Interesting behavior was observed while investigating the dependence of rheological parameters on the dilution with water in the presence of EtOH as an additive. In these experiments above investigated sample with composition MMA/BA/MAA=55/15/30 wt. % and 4 wt. % LMA was used. pH was adjusted to 8.5. ±0.1. Different amounts of EtOH was added to samples and further diluted with different amounts of water. One can notice that addition of ethanol leads to decrease of both, storage and loss modulus, as it is expectable. However, an interesting trend is observed upon dilution. In case of low content of ethanol (1 wt. %) dilution leads to decrease of mechanical modulus, but in case of higher contents of additive (3 and 5 wt. %) this reduction becomes less steep and in some cases even slight increase is observed.

The explanation of this behavior can be found in the amphiphilicity of the ethanol. Ethanol weakens the hydrophobic interactions reducing the crosslinking density of physically cross-linked hydrogel. Upon dilution with water the ethanol distribution between water and hydrophobic domains changes. Consequently, upon certain concentrations the increase of mechanical modulus due to increased numbers of crosslinking points outweighs the dilution effect, resulting into dilution induced thickening. In other words, the balance between the viscosity increase due to hydrophobic domains and viscosity decrease due to dilution determines the presence or absence of dilution induced thickening.

## Claims

1. Method for the production of pH responsive latexes comprising:
(i) preparing a reaction mixture by combining an aqueous solvent containing at least one stabilizer, preferably at least one surfactant, and a monomer mixture comprising:
(a) at least one vinylically unsaturated monomer with a solubility in water at 60 °C of > 25 wt.% and comprising an anionic functional group, preferably a carboxylic acid, phosphonic acid, and/or sulfonic acid group, or a salt or anhydride thereof, more preferably an ethylenically unsaturated C₃-C₅ carboxylic acid monomer;
(b) at least one vinylically unsaturated monomer with a solubility in water at 60 °C of > 0.01 wt.% and < 25 wt.%, preferably an ethylenically unsaturated C₃-C₅ carboxylic acid C₁-C₈ alkyl ester monomer; and
(c) at least one vinylically unsaturated monomer with a solubility in water at 60 °C of < 0.01 wt.%, preferably an ethylenically unsaturated C₃-C₅ carboxylic acid C₁₀-C₂₆ alkyl ester monomer;
(ii) homogenizing said reaction mixture of step (i) to generate stabilized miniemulsion droplets containing the monomer mixture;
(iii) adding a polymerization initiator, preferably a water-soluble polymerization initiator, to polymerize the miniemulsion droplets.

2. The method of claim 1, wherein the ethylenically unsaturated C₃-C₅ carboxylic acid monomers are selected from methacrylic acid (MAA), acrylic acid (AA), fumaric acid, methyl maleic acid, maleic acid, itaconic acid, crotonic acid, or mixtures thereof, preferably methacrylic acid, acrylic acid or mixtures thereof.

3. The method of claim 1, wherein the ethylenically unsaturated carboxylic acid alkyl ester monomers are acrylic acid or methacrylic acid alkyl esters.

4. The method of any one of claims 1 to 3, wherein the alkyl of the ethylenically unsaturated carboxylic acid alkyl ester monomers are branched or straight chain.

5. The method of any one of claims 1 to 4, wherein the at least one ethylenically unsaturated C₃-C₅ carboxylic acid C₁-C₈ alkyl ester monomer is (i) a methacrylic acid C₁-C₈ alkyl ester monomer, preferably a methacrylic acid C₁-C₃ alkyl ester monomer, more preferably a methacrylic acid methyl ester monomer; or (ii) an acrylic acid C₂-C₈ alkyl ester monomer, preferably an acrylic acid C₃-C₅ alkyl ester monomer, more preferably an acrylic acid butyl ester monomer or an acrylic acid 2-ethylhexyl ester monomer; or (iii) a mixture of (i) and (ii).

6. The method of any one of claims 1 to 5, wherein the at least one ethylenically unsaturated C₃-C₅ carboxylic acid C₁₀-C₂₆ alkyl ester monomer is (i) a methacrylic acid C₁₀-C₂₆ alkyl ester monomer, preferably a methacrylic acid C₁₂-C₁₈ alkyl ester monomer, more preferably a methacrylic acid C₁₂-C₁₆ alkyl ester monomer, or (ii) an acrylic acid C₁₀-C₂₆ alkyl ester monomer, preferably an acrylic acid C₁₂-C₁₈ alkyl ester monomer, more preferably an acrylic acid C₁₄-C₁₈ alkyl ester monomer, or (iii) a mixture of (i) and (ii).

7. The method of any one of claims 1 to 6, wherein the at least one ethylenically unsaturated C₃-C₅ carboxylic acid monomer is from the group consisting of methacrylic acid (MAA) and acrylic acid (AA), the at least one ethylenically unsaturated C₃-C₅ carboxylic acid C₁-C₈ alkyl ester monomer is selected from the group consisting of methyl methacrylate (MMA), butyl acrylate (BA) and mixtures thereof, preferably mixtures of MMA and BA, and the at least one ethylenically unsaturated C₃-C₅ carboxylic acid C₁₀-C₂₆ alkyl ester monomer is selected from the group consisting of lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate and mixtures thereof.

8. The method of any one of claims 1 to 7, wherein the monomer mixture comprises
(i) the at least one ethylenically unsaturated C₃-C₅ carboxylic acid monomer in a concentration of 10-50 wt.%, preferably 15-45 wt.%, and more preferably 20-40 wt.%; and/or
(ii) the at least one ethylenically unsaturated C₃-C₅ carboxylic acid C₁-C₈ alkyl ester monomer in a concentration of 49.9-89.9 wt.%, preferably 55-80 wt.%, more preferably 60-75 wt.%; and/or
(iii) the at least one ethylenically unsaturated C₃-C₅ carboxylic acid C₁₀-C₂₆ alkyl ester monomer in a concentration of 0.1-10 wt.%, preferably 1-8 wt.%, more preferably 2-5 wt.%.

9. The method of any one of claims 1 to 8, wherein the at least one stabilizer is a surfactant, preferably an anionic surfactant, more preferably sodium dodecyl sulfate (SDS) or an anionic surfactant of Formula I 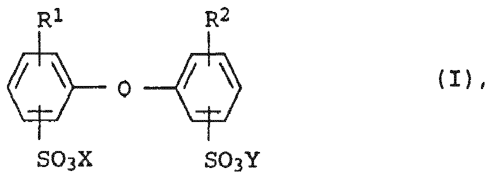 wherein R¹ and R² are independently hydrogen or C₄-C₂₄ alkyl provided that not both are hydrogen, and X and Y represent alkali metal ions or ammonium ions.

10. The method of any one of claims 1 to 9, wherein the polymerization initiator is a water-soluble polymerization initiator, preferably a peroxodisulfate

11. The method of any one of claims 1 to 10, wherein the reaction mixture prepared in step (i) is a pre-emulsion.

12. The method of any one of claims 1 to 11, wherein the polymerization is conducted at a temperature in the range of 50-90°C, preferably 60-80°C, more preferably at about 70°C for 0.1-24 hours, preferably for 0.5-6 hours, more preferably for 1-3 hours.

13. Latex obtainable according to the method of any one of claims 1 to 12.

14. Adhesive composition comprising the latex according to claim 13.

15. Use of a latex according to claim 13 as an adhesive and/or rheology modifier.
